# EUROPÄISCHE PATENTSCHRIFT

(11) **EP 0 993 937 B1**
(45) Veröffentlichungstag und Bekanntmachung des Hinweises auf die Patenterteilung: **31.03.2004**
(21) Anmeldenummer: 99119617.1
(22) Anmeldetag: 04.10.1999
(51) Int. Cl.: B32B 9/02, B32B 5/26, B32B 5/28, B32B 31/00, B32B 33/00

(54) **Verbundkonstruktionsplatte mit einem thermoplastischen Schaumkern und natürlichen Fasern, und Verfahren und Vorrichtung zum Herstellen derselben**
Composite building panels with thermoplastic foam core and natural fibers and method and apparatus for manufacturing the same
Panneau composite multicouche avec une âme en mousse et contenant des fibres naturelles ainsi que méthode et appareil pour sa fabrication

(30) Priorität: 16.10.1998 US 173878
(43) Veröffentlichungstag der Anmeldung: 19.04.2000
(73) Patentinhaber: R+S Technik GmbH, 63073 Offenbach am Main (DE)
(72) Erfinder: Spengler, Maximilian, 63150 Heusenstamm (DE)
(74) Vertreter: Schieferdecker, Lutz, Dipl.-Ing.

(56) Entgegenhaltungen:
- EP-A- 0 082 131
- EP-A- 0 671 259
- EP-A- 0 771 644
- US-A- 5 614 285

## Beschreibung

Die Erfindung bezieht sich auf eine Verbundkonstruktionsplatte, die einen Kern aus thermoplastischem Material und äußere Schichten, die natürliche Fasern in einem thermoplastischen Material enthalten, umfaßt. Die Erfindung bezieht sich weiterhin auf ein Verfahren und eine Vorrichtung zum Herstellen einer solchen Verbundkonstruktionsplatte.

### HINTERGRUND DER ERFINDUNG

Es ist allgemein bekannt, Verbundkonstruktionsplatten zu verwenden, die Polymermaterialien als lnnenraumauskleidungskomponenten in Motorfahrzeugen, Luftfahrzeugen, Schienenfahrzeugen, und dergleichen, aufweisen. Solche Auskleidungskomponenten umfassen geformte Armaturenbretter, Türinnenplatten und Einsätze, Himmelverkleidungen, und dergleichen. Herkömmliche Verbundplatten von heute zur Verwendung als solche Auskleidungskomponenten sind aus einem Polyurethan-Schaummaterial hergestellt, das mit Glasfasern, die mit Epoxidharz gesättigt oder darin eingebettet sind, hergestellt sind. Genauer gesagt werden eine oder mehrere Schichten aus Glasrovings, die mit Epoxidharz imprägniert sind, auf den Schaum zum Verstärken und Versteifen der sich ergebenden Verbundplatte auflaminiert. Als eine weitere Alternative kann ein Polypropylen-Pulvermaterial in die Glasroving-Schichten als ein Bindemittel eingesetzt werden.

Eine solche herkömmliche Verbundplatte und das Verfahren zu deren Herstellung leiden unter bestimmten Nachteilen. Zum Beispiel sind die Handhabung des Glasfasermaterials und die Handhabung und das Aufbringen des Epoxidharzes in flüssiger Form schwierig und kompliziert, insbesondere in Anbetracht der Sicherheit der Arbeitskräfte und von Umweltbetrachtungen. Weiterhin erfordert dieser Vorgang, der zum Beispiel als ein Auflege-Vorgang ausgeführt wird, wesentliche Anstrengungen beim Handhaben, und auch eine lange Härtezeit zum Härten des Harzes in einer erhitzten Kompressionsform. Da die fertiggestellten Auskleidungskomponenten eine Mischung aus unterschiedlichen, nicht abstimmbaren und nicht kompatiblen Materialien, z. B. Polyurethanschaum, Glasfasern und Epoxidharz, enthalten, sind diese Trimm- bzw. Auskleidungskomponenten nicht recycelbar durch Trennung und Wiederverarbeitung der Materialien. Da zumindest einige der Materialien nicht verbrennbar sind oder giftige oder toxische Gase abgeben, wenn sie verbrannt werden, sind die Auskleidungskomponenten auch nicht thermo-recycelbar, d. h. verbrennbar als ein Brennmaterial. Die Recycelfähigkeit der Verbundkonstruktionsplatten allgemein, und insbesondere von Motorfahrzeug-Auskleidungskomponenten, ist derzeit eine starke, bestimmende Komponente in der Industrie. Es ist dabei ein großes Erfordernis vorhanden, Verbundmaterialien zu schaffen, die leicht separiert, wiederverarbeitet zur Wiederverwendung oder als ein industrieller Brennstoff verbrannt werden können.

Ein anderer Typ einer bekannten Verbundkonstruktionsplatte, wie sie in dem US-Patent 5,709,925 (Spengler et al) offenbart ist, basiert auf einer Kombination von natürlichen Fasern und einem faserigen, thermoplastischen Material. Genauer gesagt umfaßt eine solche Verbundkonstruktionsplatte ein laminiertes Verbundsubstrat, das eine Kemschicht und zwei Abdeckschichten, die auf die Kemschicht auflaminiert sind, aufweist, wobei die Kernschicht natürliche Fasern und ein faseriges, thermoplastisches Material aufweist, und wobei jede Abdeckschicht jeweils synthetische Fasern und ein faseriges, thermoplastisches

Material aufweist. Eine solche Konstruktionsplatte erzielt Umweltvorteile dahingehend, daß alle der Materialien der Mehrschichtplatte leicht zerlegt oder in anderer Weise zur Wiederverwendung oder zum Recyceln verarbeitet werden können. Alle diese Materialien können nämlich verbrannt werden, ohne toxische Gase zu produzieren, oder das thermoplastische Material kann zerfließen, während die natürlichen Fasern abgebrannt werden und/oder die Fasermaterialien heraussepariert werden. Diese bekannten Konstruktionsplatten erzielen auch eine sehr gute Aufprallenergieabsorption ohne Splittern oder Zerbrechen, und sind demzufolge effektiv zum Erzielen eines Insassenaufprallschutzes in Motorfahrzeugen und dergleichen.

Während diese mehrschichtigen Verbundplatten sehr geeignet und effektiv zum Erreichen der vorgesehenen Zwecke sind, ist es wünschenswert, eine Verbundplatte zu schaffen, die alle Umweltvorteile, noch bessere Aufprallenergieabsorptions-Charakteristika und eine noch einfachere Struktur haben, insbesondere eine solche, die einen Schaumkern umfaßt, der durch einen relativ einfachen Vorgang hergestellt werden kann.

### ZUSAMMENFASSUNG DER ERFINDUNG

In Anbetracht des Vorstehenden ist es eine Aufgabe der Erfindung, eine Verbundkonstruktionsplatte zu schaffen, die einen Schaumkern besitzt und natürliche Fasern einsetzt, die leicht wiederverarbeitet oder recycelt werden kann, und zwar in einer umweltfreundlichen Art und Weise, die in unterschiedliche Oberflächenkonturen und -konfigurationen formgepreßt werden kann, die die notwendige Festigkeit und Steifigkeit zum Bilden von Auskleidungskomponenten mit großer Oberfläche, wie beispielsweise Kraftfahrzeugkopfleisten bzw. Kraftfahrzeugauskleidungen des Himmels, besitzt, und die eine Aufprallenergieabsorption ohne Splittern, Zerbrechen oder Brechen erzielt. Es ist eine weitere Aufgabe der Erfindung, unbedingt die Verwendung von Glasfasern, Polyurethan, Epoxidharz und anderen, thermisch wärmehärtenden oder ansonsten die Umwelt belastenden Materialien zu vermeiden. Es ist eine noch andere Aufgabe der Erfindung, einen vereinfachten Vorgang und eine vereinfachte Vorrichtung zum Herstellen solcher Verbundkonstruktionsplatten zu schaffen. Die Erfindung zielt weiterhin auf das Vermeiden und die Beseitigung der verschiedenen Nachteile nach dem Stand der Technik und darauf, zusätzliche Vorteile zu erreichen, wie dies aus der vorliegenden Beschreibung ersichtlich ist.

Die vorstehenden Aufgaben werden mit einer Verbundkonstruktionsplatte gemäß der Erfindung gelöst, die einen thermoplastischen Schaumkem aufweist, der sandwichartig zwischen zwei äußeren Schichten zwischengefügt ist, die jeweils natürliche Fasern aufweisen, die mit einem thermoplastischen Material vermischt sind. Vorzugsweise weist das thermoplastische Material der äußeren Schichten thermoplastische Fasern auf, die mindestens teilweise, oder überwiegend oder gänzlich, geschmolzen sind, um eine Matrix zu bilden, in der die natürlichen Fasern eingebettet sind. Die Polypropylenfasern und die natürlichen Fasern jeder äußeren Schicht sind vorzugsweise miteinander vernadelt bzw. vernetzt, so daß die jeweilige äußere Schicht eine verwebte Mischung aus Polypropylenfasem und natürlichen Fasern aufweist. Alternativ können die Polypropylenfasem und die natürlichen Fasern jeweils in jeweiligen Schichten von nicht orientierten, nicht verwebten Fasern vorgesehen werden, mit verschiedenen dünnen, alternierenden Schichten aus Polypropylenfasern und natürlichen Fasern, die auf die Oberseite der jeweiligen anderen gestapelt oder geschichtet oder gelegt sind, um eine jeweilige äußere Schicht zu bilden. Wenn einmal die äußere Schicht auf ungefähr 200° C aufgeheizt ist, werden die Polypropylenfasern zumindest teilweise geschmolzen, um aneinander und um die natürlichen Fasern herum fusions-gebondet bzw. schmelzverbunden zu werden, so daß jede äußere Schicht in der fertiggestellten Verbundplatte bzw. Konstruktionsplatte eine Struktur besitzt, die Polypropylenfasern und natürliche Fasern, eingebettet in eine Polypropylenmatrix oder eine Skelettstruktur, umfaßt.

Der thermoplastische Schaumkern und die thermoplastischen Fasern der äußeren Schichten bestehen vorzugsweise beide aus einem Polyolefin und insbesondere aus Polypropylen. Der Schaumkern ist vorzugsweise ein im wesentlichen festes Blatt oder eine Platte aus expandierten Polypropylenkügelchen, die erhitzt und zusammengepreßt worden sind. Solches expandiertes, zellulares Polypropylenschaummaterial besitzt eine Struktur, ein Erscheinungsbild und physikalische Eigenschaften im wesentlichen ähnlich zu expandiertem, zellularem Polystyren, wie beispielsweise "Styrofoam" (TM), allerdings ist es wesentlich umgebungsfreundlicher als das Polystyren-Material des "Styrofoam".

Die natürlichen Fasern sind im wesentlichen Zellulosefasern aus verschiedenen, natürlichen Quellen. Insbesondere können die natürlichen Fasern eine oder mehrere Fasern aus einem natürlichen Anbau, wie beispielsweise Stroh, Baumwolle, Flachs, Hanf, Jute, Sisai und Kenaf, oder natürliche Fasern, wie beispielsweise Holzproduktfasern, umfassen. Die bevorzugte, natürliche Faser ist eine Kenaf-Bastfaser. Das Verhältnis von natürlichen Fasern zu Polypropylenfasern in den äußeren Schichten liegt vorzugsweise in dem Bereich von 30% Polypropylen mit 70% natürlichen Fasem bis 70% Polypropylen mit 30% natürlichen Fasern.

Die Verbundkonstruktionsplatte kann weiterhin irgendein erwünschtes Abdeckmaterial, wie beispielsweise ein dekoratives Gewebe bzw. Gewirke oder einen Film, der auf das dreischichtige Substrat auflaminiert ist, aufweisen. Die äußere, dekorative Abdeckschicht bzw. -platte kann ein synthetischer Film oder ein Textil sein, das zumindest auf die Zwischenflächenseite mit einem Beschichtungsfilm aus Polypropylen oder Polyethylen beschichtet ist, um ein Fusions-Bonding bzw. Schmelzverbinden auf der jeweiligen äußeren Schicht, ohne das Erfordernis irgendeines Klebemittels, das dazwischen aufgebracht wird, zu erreichen.

Die Konstruktionsplatte besteht vorzugsweise völlig aus Polypropylen und einem oder mehreren natürlichen Fasermaterialien, zusammen mit einer optionalen Abdeckschicht. Aus diesem Grund kann die Konstruktionsplatte leicht recycelt oder thermisch verarbeitet werden für eine umweltfreundliche Wiederverwendung oder Zurückgewinnung, da die Abdeckschicht bzw. -Platte relativ leicht abgestreift werden kann (oder zusammen mit dem Kompositsubstrat verarbeitet werden kann, wenn die Abdeckschicht aus einem thermoplastischen Material besteht), während der Thermokunststoff des Substrats eingeschmolzen werden kann, während die natürlichen Fasern abgebrannt werden. Alternativ kann die gesamte Platte als Brennstoff bzw. Brennmaterial verbrannt werden, da das Polypropylen und die natürlichen Zellulosefasern verbrannt werden können, ohne irgendwelche toxischen Gase abzugeben.

Die vorstehenden Aufgaben werden weiterhin durch ein Verfahren und eine Vorrichtung gemäß der Erfindung zum Herstellen der vorliegenden Verbundkonstruktionsplatte gelöst. Der vorliegende Prozeß, der durch die vorliegende Vorrichtung ausgeführt wird, ist schnell, sauber und umgebungsfreundlich. Die individuellen Außenseitenschichten und der mittlere Schaumkern werden separat extern erhitzt und dann in eine geteilte Form transportiert. Durch einen Heißgieß- oder Formprozeß kann ein schneller Produktionszyklus erreicht werden, und die Konstruktionsplatte kann in irgendeine erwünschte Oberflächenkontur und -konfiguration geformt werden, während auch der Schaumkem zu der erforderlichen Dichte und Dicke für irgendeine bestimmte Anwendung komprimiert wird. Die gesamte Festigkeit und Steifigkeit der sich ergebenden Verbundplatte kann leicht eingestellt werden, wie dies erforderlich ist, indem eine geeignete Dicke für den Schaumkern vorgesehen wird. Der sich ergebende Beabstandungsabstand zwischen den äußeren Schichten beeinflußt nämlich direkt und stark und definiert im wesentlichen die gesamte Steifigkeit und Festigkeit der Platte.

Gemäß einer ersten Ausführungsform des Verfahrens werden die äußeren Schichten auf eine Temperatur in dem Bereich von 170° C bis 200° C erwärmt, während der Schaumkern auf eine Temperatur in dem Bereich von 40° C bis 100° C erwärmt wird. Dann werden die drei Schichten, d. h. der Schaumkem und die zwei äußeren Schichten, in Positionen zwischen der oberen und unteren geteilten Form transportiert. Ein Abdeckschichtmaterial kann in einen der Formabschnitte hinein plaziert werden. Die Form wird dann geschlossen, wodurch alle vier Schichten gepreßt und aneinandergebondet, komprimiert und geformt werden, und zwar in die erwünschte, dreidimensionale Oberflächenkontur. Die Wärmeenergie der vorerwärmten, äußeren Schichten und des vorerwärmten Schaumkerns erweicht das Schaumkernmaterial so, daß es flexibel und formbar wird, und liefert auch eine ausreichende Wärme an den Verbindungszwischenoberflächen, so daß die äußeren Schichten leicht geschmolzen und an dem Kemmaterial während des Formungsvorgangs fusions-gebondet bzw. schmelzverbunden werden.

Auf diese Art und Weise ist kein zusätzliches Zwischenschichtklebemittel notwendig, was den Herstellvorgang vereinfacht und auch die Struktur und die Zusammensetzung der fertiggestellten Verbundkonstruktionsplatte vereinfacht. Auch werden, aufgrund der Wärme während des Formungsvorgangs, die äußeren Schichten ausreichend erweicht, so daß das Material individuell fließen kann, und zwar in Abhängigkeit von der lokalen, dreidimensionalen Kontur und Konfiguration, bevor das Komposit durch Abkühlen in der geteilten Form stabilisiert wird. Als Folge sind die äußeren Schichten des fertiggestellten Komposits von Spannung befreit worden, so daß keine restliche Spannung in den äußeren Schichten vorhanden ist. Weiterhin schafft das Fließvermischen der Materialien der äußeren Schicht mit dem Schaumkern eine besonders starke Bindung an der Zwischenfläche.

Das vorstehend erwähnte, einstufige Formungsverfahren ist sehr schnell und effizient, erfordert allerdings eine präzise Kontrolle der Vorerwärmungstemperaturen, der Formungszeiten und der Kühltemperaturen und dergleichen. Wenn nämlich der kombinierte Wärmeeffekt der vorerwärmten, äußeren Schichten und des vorerwärmten Kerns zu groß ist, wird sich das thermoplastische Material des Schaumkerns zu sehr erweichen und der Kern wird vollständig kollabieren oder unzureichend steif sein, um zu ermöglichen, daß die Verbundplatte in eine dreidimensionale, mit Kontur versehene Konfiguration geformt werden kann.

Um die Schwierigkeiten des Einstufenverfahrens zu vermeiden, während alle Vorteile und zusätzlichen Vorteile erreicht werden, schafft die Erfindung auch einen Sandwichformungsvorgang mit einer Schichtung Schritt für Schritt, der als zweistufiger Vorgang hier bezeichnet wird. In diesem zweistufigen Vorgang wird eine erste, äußere Schicht aus natürlichen Fasern, die mit Polypropylenfasem vemadelt bzw. vernetzt oder in sonstiger Weise miteinander vermischt sind, erwärmt und in einer Heißpresse auf.eine Dichte von ungefähr 0,5 bis 0,8 kg/dm² und auf eine Temperatur von ungefähr 200° C vorkomprimiert. Das Schaumkernmaterial wird leicht auf eine Temperatur in einem Bereich von 40 bis 100° C vorerwärmt oder vorgetempert und dann wird die vorerwärmte, erste, äußere Schicht gepreßt und auf den Schaumkem in einer geteilten Form aufgeformt. Wenn einmal dieser Formungs- und Laminierschritt abgeschlossen ist und das sich ergebende Vorlaminat ausreichend durch Abkühlen stabilisiert worden ist, dann wird die zweite, äußere Schicht, die vorkomprimiert und auf 200° C vorerwärmt worden ist, ebenso wie die äußere, dekorative Abdeckschicht, gepreßt und auf das Vorlaminat in einem zweiten Schritt aufgeformt. Während dieses zweiten Schritts ist die Wärme der zweiten, äußeren Schicht ausreichend, um die zweite, äußere Schicht jeweils auf den Kern und die Abdeckschicht schmelzzuverbinden, ohne den Schaumkem bis zu dem Punkt eines übermäßigen Erweichens oder eines Schmelzens zu überhitzen, z. B. ohne Schmelzen mehr als 10% des Kernmaterials entlang der Zwischenoberflächen davon. Nach einer kurzen Abkühlzeit in der Form können die Platte oder die geformte Komponente entfernt werden. In diesem zweistufigen Vorgang ist es möglich, die notwendige Temperatur für ein Schmelzverbinden bzw. Fusionsbonden jeder äußeren Schicht auf dem Schaumkern zu erreichen, und zwar ohne Einführen von zuviel Wärmeenergie in den Schaumkem, so daß der Schaumkem zu weich wird und während des Formungsvorgangs kollabiert.

Um den vorstehend beschriebenen zweistufigen Vorgang mit einer kompakten und effizienten Anordnung einer Formungsausrüstung auszuführen, schafft die Erfindung eine Vorrichtung, in der die vier Schichten aus Material (d. h. die erste, äußere Schicht, der Schaumkern, die zweite, äußere Schicht und die Abdeckschicht) auf unterschiedliche Temperaturen vorerwärmt und in die Form aus vier unterschiedlichen Richtungen eingeführt werden, d. h. von vier Seiten der Form aus. Gemäß der Erfindung befindet sich eine formende Form an einer zentralen Stelle, zwei Heißpressen sind jeweils links und rechts der formenden Form angeordnet, eine Schaumzufuhr- und Vorerwärmungsstation ist hinter der formenden Form angeordnet und ein Abdeckplattentransportgestell transportiert die Abdeckplatte in die Form von der vierten oder vorderen Seite aus. Durch Vorsehen separater Heißpressen rechts und links kann der zweistufige Formungsvorgang schnell und effizient, ohne daß irgendeine Totzeit oder Wartezeit benötigt wird, während eines Beladens und dann Vorwärmens der äußeren Schichten in den Heizpressen, ausgeführt werden. Irgendeiner oder beide der Formungsabschnitte der formenden Form können als eine Vakuumform zum Vakuumformen der dekorativen Abdeckplatte und zum Erreichen einer verbesserten Oberflächenkonturierung ausgeführt werden, oder können einfache Druckformen sein.

Die Erfindung erzielt zumindest die folgenden, speziellen Vorteile. Die fertiggestellte Verbundkonstruktionsplatte gemäß der Erfindung besitzt ein sehr hohes Verhältnis von Festigkeit und Steifigkeit zu dem Gewicht. Zum Beispiel besitzt eine fertiggestellte Kraftfahrzeughimmelauskleidung, die das erfindungsgemäße, dreischichtige Substrat und eine dekorative Abdeckplatte bzw. Schicht umfaßt, ein Gewicht oder eine Flächenbereichsdichte in dem Bereich von 800 bis 900 g/m², während eine selbsttragende Festigkeit- und Steifigkeit erreicht wird. Diese hohe Festigkeit und das niedrige Gewicht werden stark aufgrund des Kerns des thermoplastischen Schaums, und insbesondere durch expandierten, zellularen Polypropylenschaum, erreicht. Der Schaumkem selbst besitzt eine bestimmte Steifigkeit und eine sehr niedrige Dichte, allerdings wirkt insbesondere der Schaumkem als ein Abstandselement zwischen den festen, äußeren Schichten. Wie es gemäß Statistiken ausreichend bekannt ist, erreicht, indem die äußeren Schichten voneinander beabstandet sind, die eine gute Zugspannung haben, die fertiggestellte Sandwich-Verbundplatte eine bemerkenswerte Festigkeit und Steifigkeit, die sich direkt mit der Erhöhung des Beabstandungsabstands zwischen den äußeren Schichten erhöht, d. h. der Dicke des Schaumkerns. Demzufolge können unterschiedliche Plattenfestigkeiten einfach durch Vorsehung einer unterschiedlichen Dicke des Schaumkerns erreicht werden, während dasselbe, äußere Schichtmaterial verwendet wird. Ein äußeres Schichtmaterial aus einem gemischten Faservlies, das eine Flächendichte von 300 g/m² besitzt, ist deshalb für einen weiten Bereich von Anwendungen geeignet, allerdings können äußere Schichten mit einer Dichte von 800 g/m² für Anwendungen verwendet werden, die eine extrem hohe Festigkeit erfordern.

Die Verbundstruktur der Platten, einschließlich eines luftpermeablen, expandierten, zellularen Polypropylenkerns und äußerer Verbundschichten, die natürliche Fasern und möglicherweise Polypropylenfasern, die in einer Polypropylenmatrix eingebettet sind, umfassen, erreicht auch sehr gute Schallabsorptions- und Schalldämpfungsqualitäten, da die Luftpermeabilität des Kerns und der äußeren Schichten so einstellbar und auswählbar ist, wie dies erwünscht ist. Weiterhin besitzt die sich ergebende Verbundstruktur eine sehr hohe Energieabsorption und ist deshalb ein wesentliches Sicherheitsmerkmal zum Erzielen eines Aufprallschutzes für die Insassen eines Motorfahrzeugs oder dergleichen. In einem Aufpralltest sind die vorliegenden Verbundkonstruktionsplatten dahingehend befunden worden, daß sie die Energie eines Aufpralls durch Komprimieren und Deformieren der Platte absorbieren und wegnehmen, allerdings ohne Splittern, Zerreißen oder eines sonstigen Bruchs der Platte. Dies liefert einen wesentlichen Sicherheitsvorteil gegenüber Konstruktionsplatten, die Glasfasern, Honigwabenkerne, oder dergleichen, umfassen.

Ein anderer, wesentlicher Vorteil der vorliegenden Verbundkonstruktionsplatte ist derjenige, daß sie dreidimensional formbar in einem großen Umfang ist. Die Platte kann nämlich in dreidimensionale Oberflächenkonturen geformt werden, wie dies für die Innenraumauskleidungskomponenten für Kraftfahrzeuge und dergleichen erwünscht ist. Die Formungskonfiguration kann eine gesamte Formung beider Seiten der Platte, oder eine Deformation (oder Eindrückung) nur einer Seite der Platte, umfassen, wodurch der Schaumkern in einem größeren Umfang an der beeinflußten Stelle komprimiert wird. Deshalb besitzt die vorliegende Verbundkonstruktionsplatte einen großen Vorteil gegenüber von Verbundplatten nach dem Stand der Technik, die einen Honigwabenkem, wie beispielsweise einen Aluminiumhonigwabenkem oder einen polymeren Honigwabenkem, umfassen. Solche herkömmlichen Konstruktionsplatten, die Honigwabenkerne umfassen, können nicht in eine dreidimensionale Konfiguration geformt werden, ohne den Honigwabenkem zu zerbrechen. Anstelle davon müssen die Oberflächenkonturen separat von dem Honigwabenkem aufgebaut oder geformt werden. Die vorliegenden Verbundkonstruktionsplatten sind deshalb bei Anwendungen in der Luftfahrtindustrie von Vorteil, die zum Beispiel traditionell Honigwabenkem-Verbundplatten verwendet haben, allerdings nun die vorliegenden, formbaren Verbundplatten verwenden können. Weiterhin besitzen die vorliegenden Platten ein ähnliches oder sogar besseres Verhältnis von Festigkeit zu Gewicht verglichen mit den herkömmlichen Honigwabenkernplatten.

Die speziellen Merkmale und Vorteile des erfindungsgemäßen Verfahrens und der Vorrichtung ermöglichen, daß die vorliegende Verbundplatte hergestellt werden kann. Der bevorzugte, zweistufige Vorgang ermöglicht, daß das Verbund-Sandwich in einer Art und Weise Schritt für Schritt oder Schicht für Schicht aufgebaut wird, wobei ein thermisches Schmelzverbinden zwischen jeweils zwei benachbarten Schichten vorgenommen wird. Gemäß dem zweistufigen Vorgang werden die zwei erwärmten und vorkomprimierten, äußeren Schichten individuell geformt und auf den Schaumkem in zwei separaten Schritten auflaminiert. Allerdings werden durch ein nicht simultanes Laminieren und Formen beider äußeren Schichten auf den Schaumkem, ein Überhitzen und ein Schmelzen des Schaumkerns vermieden, während noch eine ausreichende Wärme geliefert wird, um das erwünschte, thermische Schmelzverbinden jeder Schicht auf der nächsten Schicht zu erreichen. Der Schlüsselvorteil der Erfindung in Bezug hierauf ist derjenige, eine ausreichende Temperatur (z. B. 140 bis 170° C) an der Zwischenfläche zwischen dem Schaumkem und jeder jeweiligen äußeren Schicht zu erreichen, um das thermische Schmelzverbinden zu ermöglichen, ohne die Gesamtheit des Schaumkems auf dessen Erweichungs- und Schmelztemperatur in dem Bereich von 120 bis 170° C zu erwärmen. Da der Schaumkern typischerweise nur 5 bis 7 mm dick ist, würde der Schaumkem allgemein überhitzen und erweichen oder schmelzen, falls zwei vorerwärmte, äußere Schichten gleichzeitig auf den Schaumkern auflaminiert werden würden. Dieses Problem wird durch den vorliegenden, zweistufigen Vorgang vermieden. Ein solcher thermischer Sandwich-Laminiervorgang Schritt für Schritt ist nicht zuvor bekannt gewesen.

### KURZE BESCHREIBUNG DER ZEICHNUNGEN

Um die Erfindung deutlich zu verstehen, wird sie nun in Verbindung mit beispielhaften Ausführungsformen, unter Bezugnahme auf die beigefügten Zeichnungen, beschrieben werden, wobei:
- Fig. 1: zeigt eine schematische, perspektivische, aufgeschnittene Ansicht einer geformten Verbundkonstruktionsplatte gemäß der Erfindung;
- Fig. 2: zeigt eine schematische Explosionsansicht des Schaumkerns, der zwischen die zwei äußeren Schichten sandwichartig zwischengefügt werden soll und dann mit einer Abdeckschicht preßgeformt und laminiert wird, und zwar zwischen dem oberen und dem unteren Formungsabschnitt;
- Fig. 3: zeigt eine Seitenaufrißansicht einer Vorrichtung gemäß der Erfindung zum Herstellen einer geformten Verbundplatte, die eine formende Form, zwei Heizpressen, eine Schaumzufuhr- und Vorheizstation und eine Abdeckschicht-Zufuhrstation umfaßt;
- Fig. 4: zeigt eine Oberseitendraufsicht der Vorrichtung gemäß Fig. 3; und
- Fig. 5: zeigt eine vergrößerte Detailansicht eines Bereichs der Vorrichtung der Fig. 3, die teilweise einen Bereich der formenden Form und Bereiche der zwei Heizpressen darstellt.

### DETAILLIERTE BESCHREIBUNG BEVORZUGTER, BEISPIELHAFTER AUSFÜHRUNGSFORMEN UND DES BESTEN MODUS DER ERFINDUNG

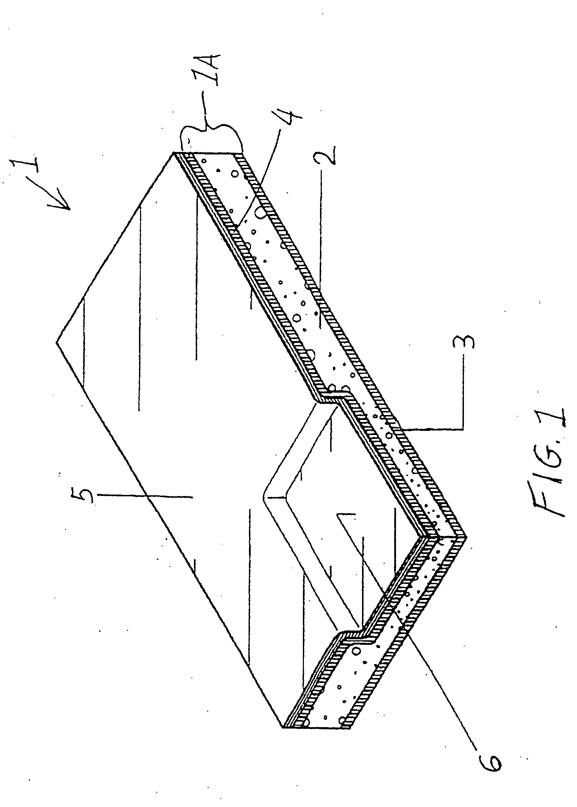

Wie in Fig. 1 dargestellt ist, umfaßt eine geformte Verbundkonstruktionsplatte 1 gemäß der Erfindung ein dreischichtiges Substrat 1A mit einer Abdeckplatte 5, die darauf auflaminiert ist. Das dreischichtige Substrat 1A umfaßt einen thermoplastischen Schaumkem 2, der vorzugsweise einen Polyolefinschaum aufweist, noch bevorzugter einen Polyethylenund/oder Polypropylenschaum aufweist, und am bevorzugtesten aus einem im wesentlichen steifen, expandierten, zellularen Polypropylenschaum besteht. Der Schaumkem 2 ist zwischen einer ersten, äußeren Schicht 3 und einer zweiten, äußeren Schicht 4 sandwichartig zwischengefügt und laminiert, wobei jede jeweils natürliche Fasern und ein thermoplastisches Matrixmaterial aufweist. Die natürlichen Fasern sind am bevorzugtesten Kenaf-Fasern und das thermoplastische Matrixmaterial ist vorzugsweise ein Polyolefin, noch bevorzugter ein Polypropylen und/oder ein Polyethylen, und am bevorzugtesten besteht es aus Polypropylenfasern, die teilweise geschmolzen worden sind, um zu einer Struktur von verbleibenden Polypropylenfasern und natürlichen Fasern, die in eine geschmolzene Polypropylenmatrix eingebettet sind, zu führen. Die zwei äußeren Schichten 3 und 4 sind auf dem Schaumkern 2 thermisch schmelzverbunden.

Die Zusammensetzung der äußeren Schichten 3 und 4 umfaßt 30 bis 70% Polypropylenfasern, die mit 70 bis 30% natürlichen Fasem gemischt sind. Die besondere Zusammensetzung ist innerhalb dieses Bereichs ausgewählt, um die erwünschte Steifigkeitscharakteristik und dergleichen zu erhalten. Die natürlichen Fasern und die Polypropylenfasern jeder äußeren Schicht 3 und 4 sind miteinander vernadelt bzw. vemetzt oder geschichtet und aneinanderlaminiert, oder in sonstiger Weise miteinander gemischt, um eine äußere Kompositschicht bzw. Verbundschicht zu bilden.

Die Abdeckplatte 5 ist ein dekoratives Textilgewebe bzw. -gewirke oder ein Film, wie beispielsweise eine synthetische Lederimitation, oder dergleichen. Wenn die Abdeckplatte 5 kein thermoplastisches Material oder insbesondere ein solches auf Polyolefinbasis aufweist, wird die Rückseitenoberfläche der Abdeckplatte 5 mit einem Polyethylen- oder Polypropylenfilm beschichtet, um ein Fusions-Bonden bzw. Schmelzverbinden der Abdeckplatte 5 auf dem Substrat 1A zu ermöglichen. Die Rückseite der Abdeckplatte 5 kann auch mit einer sich weich anfühlenden" ("Soft-Touch") Polypropylenschaumschicht versehen sein. Alle Schichten, nämlich die Abdeckplatte 5, die äußeren Schichten 3 und 4, und der Schaumkem 2 werden thermisch aneinander fusions-gebondet. Das Polypropylenmaterial jeder Schicht wird nämlich geschmolzen und an das Polypropylenmaterial der benachbarten Schichten angebondet.

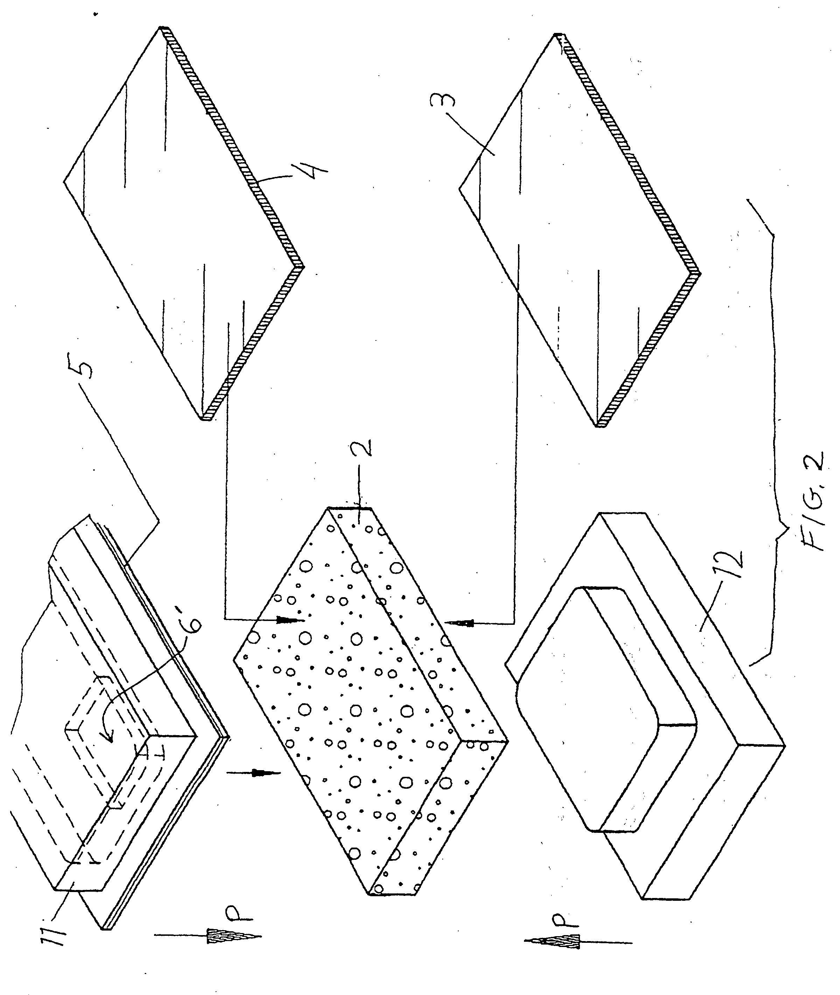

Die vorliegende Konstruktionsplatte 1 kann als eine flache, ebene Platte, für ein späteres Schneiden, Formen oder dergleichen, wie dies in irgendeiner bestimmten Anwendung benötigt wird, hergestellt werden. Alternativ, und bevorzugt, kann die vorliegende Verbundkonstruktionsplatte 1 ursprünglich so hergestellt werden, daß sie eine erwünschte, dreidimensional geformte Kontur besitzt. Als ein Beispiel stellt Fig. 1 schematisch einen eingedrückten oder komprimierten Flächenbereich 6 in der äußeren oder frei liegenden Oberfläche der Verbundplatte 1 dar. Dadurch wird der Schaumkern 2 komprimiert und gehärtet, und zwar in einem größeren Umfang, in diesem komprimierten Flächenbereich 6. Weiterhin können alle Kanten einer Platte 1 komprimiert sein, um gedichtet oder geschlossen umgebördelt zu werden, um eine fertiggestellte Kante zu erzielen. Fig. 2 stellt schematisch einen Vorgang und eine Form zum Herstellen der Verbundkonstruktionsplatte 1 dar. Die formende Ausrüstung umfaßt einen unteren Formabschnitt 12 und einen dazu passenden, oberen Formabschnitt 11, wobei ein Formvorsprung 6' so angepaßt ist, um den komprimierten Flächenbereich 6 in der fertiggestellten Verbundkonstruktionsplatte 1 zu bilden. Wie in Fig. 2 dargestellt ist, sind die erste und die zweite, äußere Schicht 3 und 4 auf gegenüberliegenden Seiten des Polypropylenschaumkerns 2 angeordnet, die Abdeckplatte 5 ist auf der Oberseite der zweiten, äußeren Schicht 2 angeordnet, und dann wird diese Sandwichstruktur komprimiert und zwischen dem oberen und dem unteren Formabschnitt 11 und 12 geformt.

Gemäß einem bevorzugten Verfahren der Erfindung wird das Formen in einem zweistufigen Vorgang ausgeführt, wodurch sich die Formabschnitte 11 und 12 über zwei Zyklen öffnen und schließen, um das Formen der Verbundkonstruktionsplatte zu vervollständigen. Die zwei äußeren Schichten 3 und 4 werden jeweils unabhängig voneinander vorgewärmt und vorkomprimiert in einer Heizpresse, vorzugsweise auf eine Temperatur von ungefähr 200° C und eine Dichte von ungefähr 0,5 bis 0,8 kg/dm². Gleichzeitig wird der Schaumkern 2 leicht vorgewärmt und vorgetempert auf eine Temperatur in dem Bereich von 40 bis 100° C, um sicherzustellen, daß das erwünschte, thermische Schmelzverbinden bzw. Fusions-Bonding stattfinden wird. Dann wird, in dem ersten Formungsschritt, die vorgewärmte, erste, äußere Schicht 3 auf den unteren Formabschnitt 12 gelegt, der vorgetemperte Schaumkern 2 wird zwischen dem oberen und dem unteren Formabschnitt 11 und 12 angeordnet und diese Formabschnitte 11 und 12 werden geschlossen und ein Formungsdruck wird in der Richtung der Pfeile P aufgebracht. Dadurch wird die vorgewärmte, erste, äußere Schicht 3 auf dem Schaumkem 2 fusions-gebondet und der Schaumkern 2 wird anfänglich in die erwünschte, dreidimensional geformte Kontur geformt.

Dann wird, nach einer kurzen Abkühlzeit, die Form geöffnet, um den darauffolgenden, zweiten Formungsschritt auszuführen, indem die vorerwärmte, zweite, äußere Schicht4 auf das Vorlaminat des Schaumkerns 2 und die erste, äußere Schicht 3 gelegt wird, indem die Abdeckplatte 5 zwischen die zweite, äußere Schicht 4 und den oberen Formungsabschnitt 11 angeordnet wird, und indem dann die Form erneut geschlossen wird. In diesem zweiten Formungsschritt wird die zweite, äußere Schicht 4 auf den Schaumkern 3 auflaminiert, die Abdeckplatte 5 wird auf die zweite, äußere Schicht 4 auflaminiert und die gesamte Verbundkonstruktionsplatte wird in deren endgültige, dreidimensionale, mit Kontur versehene Konfiguration geformt.

Die Formungsabschnitte 11 und 12 werden vorzugsweise gekühlt, zum Beispiel durch ein Kühlfluid, das durch Kanäle strömt, die darin vorgesehen sind, und eine ausreichende Kühlzeit wird zwischen dem ersten und dem zweiten Formungsschritt zugelassen, um sicherzustellen, daß der Schaumkern 2 nicht auf eine Temperatur überhitzt wird, bei der er in seinem Inneren erweicht und schmilzt: Das Schmelzen und Fusions-Bonding soll nur unmittelbar an den äußeren Oberflächen des Schaumkems 2 auftreten, die auf den äußeren Schichten 3 und 4 angebondet sind. Die Wärme, die durch die vorerwärmten, äußeren Schichten geliefert wird, ist für diesen Zweck ausreichend. Nach einem Abschluß des zweiten Formungsschritts wird zugelassen, daß eine kurze Kühlzeit von ungefähr 40 bis 60 Sekunden stattfindet, und dann kann die fertiggestellte Verbundkonstruktionsplatte aus der Form entnommen werden.

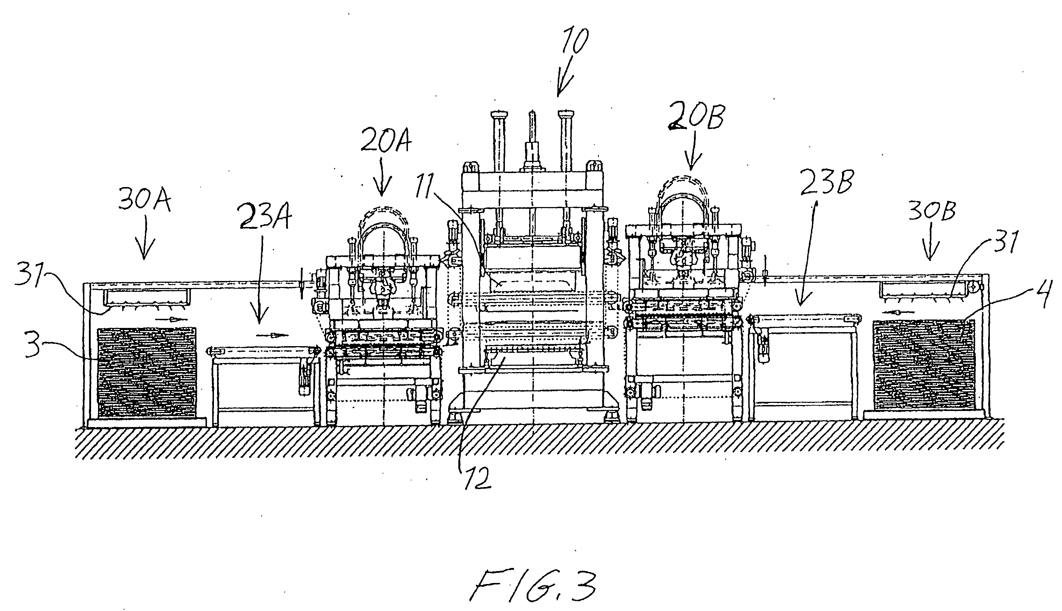

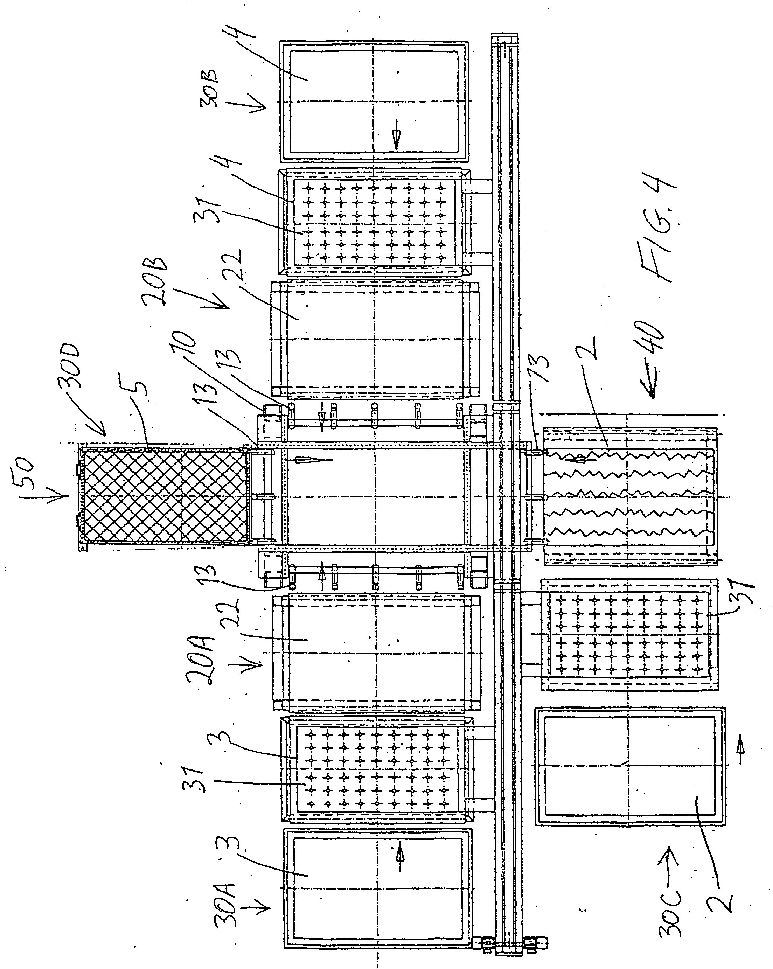

Die Fig. 3, 4 und 5 stellen jeweils eine Vorderansicht, eine Oberseitenansicht und eine Teildetailansicht einer Vorrichtung dar, die zum Ausführen des erfindungsgemäßen Verfahrens und zum Herstellen der erfindungsgemäßen Verbundkonstruktionsplatte geeignet ist. Die Vorrichtung umfaßt: eine formende Form 10; zwei Heizpressen 20, nämlich eine linke Heizpresse 20A, die auf der linken Seite der formenden Form 10 angeordnet ist, und eine rechte Heizpresse 20B, die an der rechten Seite der formenden Form 10 angeordnet ist; verschiedene Materialzufuhrstapel 30, nämlich einen linken, äußeren Schichtstapel 30A, angeordnet links der linken Heizpresse 20A, einen rechten, äußeren Schichtstapel 30B, angeordnet rechts der rechten Heizpresse 20B, einen Abdeckplattenstapel 30D, der hinter der formenden Form 10 angeordnet ist, und einen Schaumkernstapel 30C, der vor der formenden Form 10 angeordnet ist; eine Schaumzufuhr- und -vorheizstation 40, die vor der formenden Form 10 angeordnet ist, und eine Abdeckplatten-Zufuhrstation 50, die hinter der formenden Form 10 angeordnet ist.

Die formende Form 10 umfaßt einen oberen Formungsabschnitt 11 und einen unteren Formungsabschnitt 12, die vorzugsweise durch ein Kühlfluid gekühlt werden, das durch Kanäle darin fließt, und die relativ zueinander bewegbar sind. Zum Beispiel kann der obere Formungsabschnitt 11 nach oben und nach unten durch hydraulische oder pneumatische Zylinder bewegt werden, und zwar in irgendeiner bekannten Art und Weise, während der untere Formungsabschnitt 12 auf einem Basisrahmen fixiert verbleibt. Jeweilige linke und rechte Transportfördereinrichtungen 23A und 23B sind jeweils zwischen dem linken, äußeren Schichtstapel 30A und der linken Heizpresse 20A und zwischen dem rechten, äußeren Schichtstapel 30B und der rechten Heizpresse 20B, zum Transportieren jeweiliger Platten des äußeren Schichtmaterials 3 und 4 in die Heizpressen 20A und 20B, angeordnet. Um dies zu erreichen, ist jeder Materialzufuhrstapel 30 mit einer Nadelgreiferfördereinrichtung 31 zum Anheben einer Oberseitenplatte aus Material von dem jeweiligen Stapel und zum Transportieren von diesem auf die jeweilige Transportfördereinrichtung 23A oder 23B, die wiederum das äußere Schichtmaterial in die jeweilige Heizpresse transportiert, ausgerüstet.

Die Schaumzufuhr- und -vorheizstation 40 umfaßt eine bewegbare Vorheiz- oder Temperplatte 41 zum Vortempern des Schaumkernmaterials 2 und zum Bewegen von diesem von der Station 40 in die formende Form 10. Diese Vortemperplatte 41 kann aufgeheizt und/oder gekühlt werden, wie dies benötigt wird, unter Verwendung eines Fluids, das durch Kanäle strömt, die darin vorgesehen sind, und zwar zum Tempem des Schaummaterials, wie dies benötigt wird, um eine Temperatur in dem Bereich von 40° C bis 100° C zu erreichen. Die Abdeckplatten-Zufuhrstation 50 umfaßt ein bewegbares Nadelgreifergestell 51 zum Ergreifen der Kanten der Abdeckplatte 5 und zum Bewegen von dieser in eine Position in die formende Form 10 hinein. Pneumatische Zylinder 52 sind zum Anheben und Erniedrigen des bewegbaren Nadelgreifergestells 51 vorgesehen, und zwar so, wie es während des Formungszyklus benötigt wird, d. h. um die Formungsbewegung des oberen Formungsabschnitts 11 auf dem unteren Formungsabschnitt 12 in Übereinstimmung zu bringen, um so die Abdeckplatte 5 unter Spannung während des Formungsvorgangs hinweg zu halten und um dadurch die Bildung von Falten, Blasen und Taschen in der Abdeckplatte 5 in deren fertiggestellten, geformten Konfiguration zu vermeiden. Die pneumatischen Zylinder können aktiv, semiaktiv oder passiv sein, d. h. sie müssen als pneumatische Federn und Dämpfungsteile wirken, was automatisch zu dem größeren Druck führt, der durch den sich bewegenden Formabschnitt zum Beispiel aufgebracht wird.

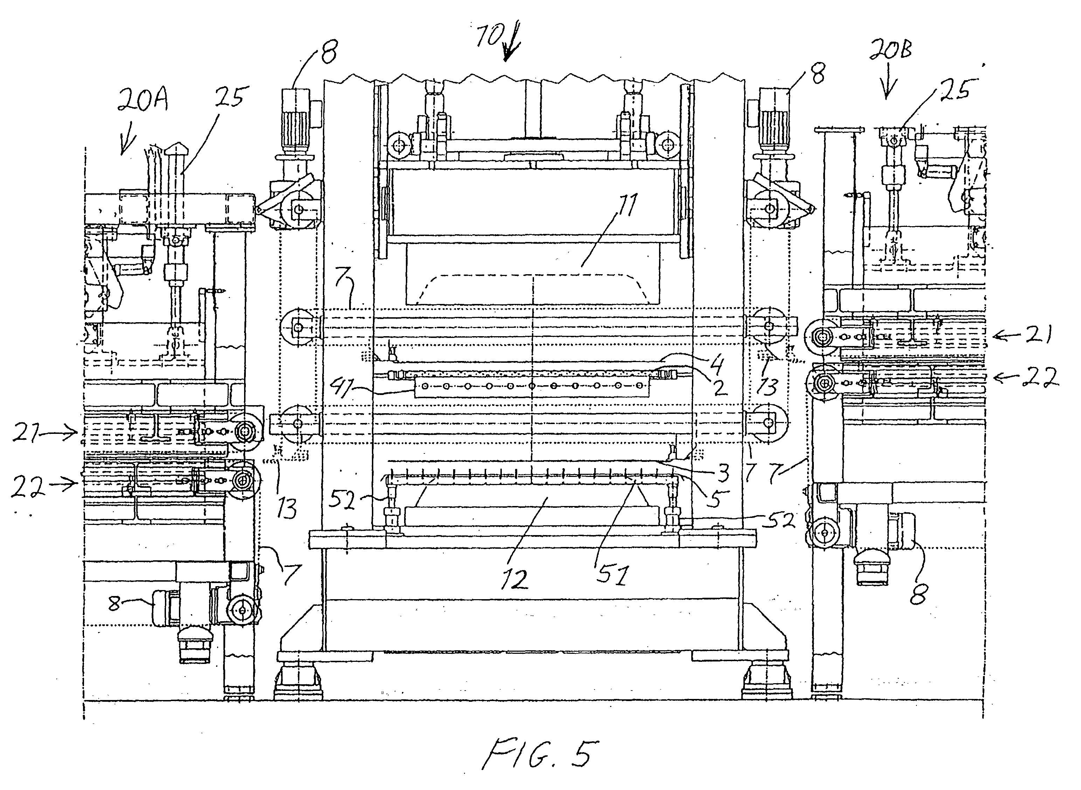

Wie insbesondere in Fig. 5 dargestellt ist, können die Heizpressen 20A und 20 B jeweils bewegbare obere und untere Heizplatten 21 und 22 umfassen, die durch hydraulische Zylinder 25 angetrieben werden, zum jeweiligen Vorwärmen und Vorkomprimieren der äußeren Schichtplatten 3 und 4 dazwischen. Um zu verhindern, daß das erhitzte Polypropylenmaterial an den Heizplatten 21 und 22 anhaftet, umfassen die Heizpressen 20A und 20B weiterhin "Teflon" (TM) Bänder 7 in Form einer geschlossenen Schleife, die durch Antriebsanordnungen 8 angetrieben werden, als eine Freigabeplatte zwischen der jeweiligen Heizplatte und dem äußeren Schichtmaterial. Diese Teflon-Bänder 7 können weiterhin so wirken, um die erhitzten und komprimierten äußeren Schichtplatten 3 und 4 aus den Heizpressen 20A und 20B heraus und in die formende Form 10 hinein zu transportieren. Die formende Form 10 kann ähnlich solche bewegbaren Teflon-Bänder 7 in geschlossener Schleife umfassen, die durch Antriebsanordnungen 8 angetrieben werden. Die formende Form 10 umfaßt weiterhin Greiferzungen oder -klauen 13, die die vorerwärmten, äußeren Schichten 3 und 4 ergreifen, die äußeren Schichten transportieren und dann die äußeren Schichten in der geeigneten Position und Anordnung zwischen dem oberen dem unteren Formabschnitt 11 und 12 halten.

Die vorliegende Vorrichtung wird so betrieben, um das erfindungsgemäße, zweistufige Verfahren, das allgemein vorstehend beschrieben ist, auszuführen. Die jeweiligen Nadelgreiferfördereinrichtungen 31 ergreifen jeweils eine einzelne Platte der äußeren Schichten 3 oder 4 oder des Schaumkerns 2 von den jeweiligen Materialzufuhrstapeln 30A, 30B und 30C. Die äußeren Schichten 3 und 4 sind auf den Transportfördereinrichtungen 23A und 23B angeordnet, die jeweils die äußeren Schichtmaterialien in die Heizpressen 20A und 20B transportieren, wo die äußeren Schichtmaterialien zwischen der oberen und der unteren Heizplatte 21 und 22 erhitzt und vorkomprimiert werden. Der Schaumkern 2 wird auf der bewegbaren Temperplatte 41 aufgenommen, die den Schaumkern 2 tempert und ihn in die Position zwischen dem oberen und dem unteren Formabschnitt 11 und 12 bewegt.

Dabei wird eine Abdeckplatte 5 durch das bewegbare Nadelgreifergestell 51 aufgenommen und in eine Position zwischen der Temperplatte 41 und dem unteren Formabschnitt 12 in der formenden Form 10 bewegt. Dann wird die vorerwärmte und vorkomprimierte, äußere Schicht 3 durch die Greiferzungen oder -klauen 13 in eine Position zwischen der Abdeckplatte 5 und dem Schaumkern 2 bewegt, der von der bewegbaren Temperplatte 41 freigegeben worden ist, die wiederum von der formenden Form 10 zurückgezogen worden ist. Dann wird der obere Formungsabschnitt 11 nach unten auf den unteren Formungsabschnitt 12 bewegt, um so einen ersten Formungszyklus oder -schritt auszuführen, indem die Abdeckplatte 5 und die erste, äußere Schicht 3 auf den Schaumkem 2 auflaminiert und schmelzverbunden bzw. fusions-gebondet werden, und das sich ergebende Vorlaminat wird in die erwünschte Konfiguration geformt.

Dann wird der obere Formabschnitt 11 wieder angehoben, um die Form zu öffnen, woraufhin die zweite, äußere Schicht 4 in Position durch die Greiferzungen oder -klauen 13 gebracht wird. Dann wird der obere Formabschnitt 11 wieder in einem zweiten Formungszyklus oder -schritt geschlossen, wodurch die äußere Schicht 4 auf dem Schaumkern 2 laminiert und schmelzverbunden wird, und dann wird die sich ergebende Verbundkonstruktionsplatte in deren endgültige, dreidimensionale Konfiguration geformt. Nach einer Kühlzeit von 40 bis 60 Sekunden kann die fertiggestellte Konstruktionsplatte von der geöffneten Form entfernt werden.

Durch Vorsehen einer geeigneten Ausrüstung zum Bewegen der vier bestimmten Schichten in eine Position in der formenden Form von vier unterschiedlichen Seiten aus, d. h. von vier unterschiedlichen Richtungen aus, kann eine relativ kompakte Formungsvorrichtung mit einem sehr effizienten Formungszyklus erreicht werden. Durch Vorsehen der separaten rechten und linken Heizpressen 20A und 20B ist im wesentlichen dabei keine Stillstands- oder Wartezeit zum Vorwärmen oder Vorkomprimieren der äußeren Schichtmaterialien vorhanden und der gesamte Formungsvorgang kann in einer schnellen Folge durch altemierendes Zuführen der äußeren Schichtplatten 3 und 4 von der linken Heizpresse 20A und von der rechten Heizpresse 20B ausgeführt werden. Weiterhin ist es möglich, die Heizpressen auf unterschiedliche Temperaturen einzustellen, so daß die erste und die zweite äußere Schicht 3 und 4 auf unterschiedliche Temperaturen aufgeheizt werden können, falls dies für irgendeine bestimmte Anwendung erwünscht ist, um das erforderliche Verbinden zu erreichen, während ein Überhitzen des Schaumkems vermieden wird.

Es sollte verständlich werden, daß die relativen Positionen der Satellitenstationen um die formende Form 10 herum umgekehrt oder geändert werden können. Zum Beispiel kann die Schaumzufuhr- und -vorheizstation 40 hinter der formenden Form 10 liegen, während die die Abdeckplatte zuführende Station 50 vor der Zufuhrstation 10 liegt, oder die zwei Zufuhrstapel 30A und 30B für die äußeren Schichten könnten auf benachbarten Seiten, um 90°, im Gegensatz zu 180°, voneinander versetzt angeordnet sein. Die formende Vorrichtung kann weiterhin irgendwelche herkömmlichen Vorrichtungen und Mechanismen zum Halten der verschiedenen Materialschichten in Position, zum Antreiben der Komponenten und zum Ausführen der notwendigen Verfahrensschritte umfassen.

Obwohl die Erfindung unter Bezugnahme auf spezifische, beispielhafte Ausführungsformen beschrieben worden ist, wird ersichtlich werden, daß sie dazu vorgesehen ist, alle Modifikationen und Äquivalente innerhalb des Schutzumfangs der beigefügten Ansprüche abzudecken. Es sollte auch verständlich werden, daß die vorliegende Offenbarung alle möglichen Kombinationen von irgendwelchen individuellen Merkmalen, die in irgendeinem der beigefügten Ansprüche angegeben sind, umfaßt.

## Patentansprüche

1. Verbundkörper, insbesondere für eine Innenverkleidung von Fahrzeugen, mit einer Kernschicht (2) und zwei auf entgegengesetzten Seiten mit der Kernschicht (2) verbundenen Schichten (3, 4), die natürliche Fasern enthalten, wobei alle drei Schichten (2, 3, 4) thermoplastisches Polyolefinmaterial aufweisen, **dadurch gekennzeichnet, daß** die Kernschicht (2) eine Hartschaumschicht aus Polyolefinmaterial ist.

2. Verbundkörper nach Anspruch 1, **dadurch gekennzeichnet, daß** die Kernschicht (2) sowie die beiden Schichten (3, 4) aus demselben Polyolefin bestehen.

3. Verbundkörper nach Anspruch 2, **dadurch gekennzeichnet, daß** das Polyolefin Polypropylen ist.

4. Verbundkörper nach einem der Ansprüche 1 bis 3, **dadurch gekennzeichnet, daß** als natürliche Fasern Kenaf-Pflanzenfasern vorgesehen sind.

5. Verbundkörper nach einem der Ansprüche 1 bis 4, **dadurch gekennzeichnet, daß** beide Schichten (3, 4) eine Polyolefinmatrix aufweisen, in der die natürlichen Fasern eingebettet sind.

6. Verbundkörper nach Anspruch 5, **dadurch gekennzeichnet, daß** zusätzlich zu den natürlichen Fasern Polyolefinfasern in der Polyolefinmatrix der beiden Schichten (3, 4) eingebettet sind.

7. Verbundkörper nach Anspruch 6, **dadurch gekennzeichnet, daß** der Polyolefinschaum, die Polyolefinfasern und die Polyolefinmatrix aus Polypropylen bestehen.

8. Verbundkörper nach Anspruch 6 oder 7, **dadurch gekennzeichnet, daß** der Faseranteil der Schichten (3, 4) jeweils zu 30 % bis 70 % aus den natürlichen Fasern und im übrigen aus den Polyolefinfasern besteht.

9. Verbundkörper nach einem der Ansprüche 1 bis 8, **dadurch gekennzeichnet, daß** die beiden Schichten (3, 4) jeweils durch thermische Fusion ihres thermoplastischen Materials mit dem thermoplastischen Schaum der Kernschicht (2) schmelzverbunden sind.

10. Verbundkörper nach einem der Ansprüche 1 bis 9, **dadurch gekennzeichnet, daß** er frei von Glasfasern, Polyurethan, Epoxidharz und Klebemitteln ist.

11. Verbundkörper nach einem der Ansprüche 1 bis 10, **dadurch gekennzeichnet, daß** die Kernschicht (2) aus expandiertem, zellularem Polypropylen-Hartschaum besteht.

12. Verbundkörper nach einem der Ansprüche 1 bis 11, **dadurch gekennzeichnet, daß** der Hartschaum der Kernschicht (2) luftpermeabel ist.

13. Verbundkörper nach einem der Ansprüche 1 bis 12, **dadurch gekennzeichnet, daß** er selbsttragend und formstabil bei einer Dichte von 800 bis 900 g/m² und einer Dicke der Kernschicht (2) von 4 bis 8 mm ist.

14. Verbundkörper nach einem der Ansprüche 1 bis 13, **dadurch gekennzeichnet, daß** mit der der Kernschicht (2) abgewandten Seite der einen Schicht (4) eine Deckschicht (5) aus textilem Gewebe oder Gewirke oder aus einem synthetischen Film mittels einer Polyolefin-Zwischenschicht schmelzverbunden ist.

15. Verbundkörper nach einem der Ansprüche 1 bis 14, **gekennzeichnet durch** eine dreidimensionale, mit Kontur versehene, formstabile Konfiguration.

16. Verfahren zum Herstellen eines Verbundkörpers gemäß Anspruch 1, bei dem die beiden Schichten (3, 4) erwärmt und in einer zwischen zwei Formflächen (11, 12) gebildeten Formkammer an die Kernschicht (2) angedrückt und dabei mit dieser verbunden werden, **dadurch gekennzeichnet, daß** die beiden Schichten (3, 4) außerhalb der Formkammer vorgewärmt und einzeln in zeitlichem Abstand nacheinander an die Kernschicht (2) aus Schaumstoff so angedrückt und mit dieser schmelzverbunden werden, daß die Schaumstoffstruktur der Kernschicht (2) zumindest weitgehend erhalten bleibt.

17. Verfahren nach Anspruch 16, **dadurch gekennzeichnet, daß** nach dem Aufbringen der ersten Schicht (3) auf die Kernschicht (2) die gebildete Schichtanordnung (2, 3) zwischengekühlt wird, bevor die vorgewärmte zweite Schicht (4) aufgebracht wird.

18. Verfahren nach Anspruch 16 oder 17, **dadurch gekennzeichnet, daß** mit dem Andrücken der Schichten (3, 4) an die Kernschicht (2) die Schichtanordnung (1A) dreidimensional geformt wird.

19. Verfahren nach einem der Ansprüche 16 bis 18, **dadurch gekennzeichnet, daß** die Schichten (3, 4) jeweils auf eine Temperatur von 180°C bis 200°C vorgewärmt werden.

20. Verfahren nach einem der Ansprüche 16 bis 19, **dadurch gekennzeichnet, daß** vor dem Aufbringen der Schichten (3, 4) auf die Kernschicht (2) diese auf eine Temperatur von 40°C bis 100°C vorgetempert wird.

21. Verfahren nach einem der Ansprüche 16 bis 20, **dadurch gekennzeichnet, daß** die Schichten (3, 4) mit dem Vorwärmen auch vorkomprimiert werden.

22. Verfahren nach einem der Ansprüche 16 bis 21, **dadurch gekennzeichnet, daß** beim Schmelzverbinden der Schichten (3, 4) mit der Kernschicht (2) maximal 10 % der Kernschicht schmelzen.

23. Vorrichtung zum Herstellen des Verbundkörpers gemäß Anspruch 1 mit einer Form (10), die einen oberen Formabschnitt (11) und einen unteren Formabschnitt (12) umfaßt, und mit einer der Form seitlich benachbarten Heizeinrichtung zum Erwärmen der Schichten (2, 3, 4) des Verbundkörpers (1), **gekennzeichnet durch** eine erste Heizpresse (20A) auf einer ersten Seite der Form (10) für die erste Schicht (3), eine zweite Heizpresse (20B) auf einer zweiten Seite der Form (10) für die zweite Schicht (4), eine bewegbare Temperstation (40) für die Kernschicht (2) auf einer dritten Seite der Form (10) mit einer zwischen die Formungsabschnitte (11, 12) der geöffneten Form (10) bewegbaren Temperplatte (41) und einen bewegbaren Nadelgreiferrahmen (51) für eine Deckschicht (5), der auf einer vierten Seite der Form (10) angeordnet ist und zwischen die Formungsabschnitte (11, 12) der geöffneten Form (10) bewegbar ist.

24. Vorrichtung nach Anspruch 23, **dadurch gekennzeichnet, daß** die erste Heizpresse (20A), die Temperstation (40), die zweite Heizpresse (20B) und der Nadelgreiferrahmen (51) um jeweils 90° zueinander versetzt um die Form (10) herum verteilt sind, wobei die beiden Heizpressen (20A, 20B) sich auf entgegengesetzten Seiten der Form (10) gegenüberliegen.

## Claims

1. Composite body, particularly for an inner lining of motor vehicles, with a core layer (2) and two layers (3, 4), which are connected with the core layer (2) on opposite sides and which contain natural fibres, wherein all three layers (2, 3, 4) comprise thermoplastic polyolefin material, **characterised in that** the core layer (2) is a high-resistance foam layer of polyolefin material.

2. Composite body according to claim 1, **characterised in that** the core layer (2) as well as the two layers (3, 4) consist of the same polyolefin.

3. Composite body according to claim 2, **characterised in that** the polyolefin is polypropylene.

4. Composite body according to one of claims 1 to 3, **characterised in that** kenaf plant fibres are provided as natural fibres.

5. Composite body according to one of claims 1 to 4, **characterised in that** the two layers (3, 4) comprise a polyolefin matrix in which the natural fibres are embedded.

6. Composite body according to claim 5, **characterised in that** in addition to the natural fibres polyolefin fibres are embedded in the polyolefin matrix of the two layers (3, 4).

7. Composite body according to claim 6, **characterised in that** the polyolefin foam, the polyolefin fibres and the polyolefin matrix consist of polypropylene.

8. Composite body according to claim 6 or 7, **characterised in that** the fibre proportion of the layers (3, 4) amounts each time to 30% to 70% of the natural fibres and otherwise consists of the polyolefin fibres.

9. Composite body according to one of claims 1 to 8, **characterised in that** the two layers (3, 4) are each fusibly connected with the thermoplastic foam of the core layer (2) by thermal fusion of their thermoplastic material.

10. Composite body according to one of claims 1 to 9, **characterised in that** it is free of glass fibres, polyurethane, epoxy resin and adhesives.

11. Composite body according to one of claims 1 to 10, **characterised in that** the core layer (2) consists of expanded cellular polypropylene high-resistance foam.

12. Composite body according to one of claims 1 to 11, **characterised in that** the high-resistance foam of the core layer (2) is air-permeable.

13. Composite body according to one of claims 1 to 12, **characterised in that** it is self-supporting and stable in shape at a density of 800 to 900 g/m² and a thickness of the core layer (2) of 4 to 8 mm.

14. Composite body according to one of claims 1 to 13, **characterised in that** a cover layer (5) of a textile woven material or knitted material or of a synthetic film is fusibly connected with the side, which is remote from the core layer (2), of one layer (4) by means of a polyolefin intermediate layer.

15. Composite body according to one of claims 1 to 14, **characterised by** a three-dimensional configuration which is provided with a contour and is stable in shape.

16. Method of producing a composite body according to claim 1, in which the two layers (3, 4) are heated and pressed against and thus connected with the core layer (2) in a mould chamber formed between two mould surfaces (11, 12), **characterised in that** the two layers (3, 4) are preheated outside the mould chamber and so individually pressed in succession at a spacing in time against the core layer (2) of foam material and fusibly connected therewith that the foam material structure of the core layer (2) is at least substantially maintained.

17. Method according to claim 16, **characterised in that** after application of the first layer (3) to the core layer (2) the formed layer arrangement (2, 3) is intermediately cooled before the preheated second layer (4) is applied.

18. Method according to claim 16 or 17, **characterised in that** by pressing of the layers (3, 4) against the core layer (2) the layer arrangement (1A) is formed to be three-dimensional.

19. Method according to one of claims 16 to 18, **characterised in that** each of the layers (3, 4) is preheated to a temperature of 180° C to 200° C.

20. Method according to one of claims 16 to 19, **characterised in that** before application of the layers (3, 4) to the core layer (2) this is adjusted in temperature beforehand to a temperature of 40° C to 100° C.

21. Method according to one of claims 16 to 20, **characterised in that** the layers (3, 4) are also pre-compressed by the preheating.

22. Method according to one of claims 16 to 21, **characterised in that** at most 10% of the core layer (2) is melted during the fusible connection of the layers (3, 4) with the core layer.

23. Device for producing the composite body according to claim 1, with a mould (10), which comprises an upper mould section (11) and a lower mould section (12), and with a heating device, which is laterally adjacent to the mould, for heating the layers (2, 3, 4) of the composite body (1), **characterised by** a first heating press (20A) on a first side of the mould (10) for the first layer (3), a second heating press (20B) on a second side of the mould (10) for the second layer (4), a movable temperature-adjusting station (40) for the core layer (2) on a third side of the mould (10) with a temperature adjusting plate (41), which is movable between the moulding sections (11, 12) of the opened mould (10), and a movable needle gripper frame (51) for a cover layer (5), which is arranged on the fourth side of the mould (10) and is movable between the moulding sections (11, 12) of the opened mould (10).

24. Device according to claim 23, **characterised in that** the first heating press (20A), the temperature-adjusting station (40), the second heating press (20B) and the needle gripper frame (51) are distributed around the mould (10) to be offset relative to one another in each instance by 90°, wherein the two heating presses (20A, 20B) are opposite one another on opposite sides of the mould (10).

## Revendications

1. Corps composite, notamment pour un revêtement intérieur de véhicules, avec une couche centrale (2) et deux couches (3, 4) reliées à des côtés opposés à la couche centrale (2), qui contiennent des fibres naturelles, où toutes les trois couches (2, 3, 4) présentent un matériau thermoplastique en polyoléfine, **caractérisé en ce que** la couche centrale (2) est une couche de mousse dure en matériau de polyoléfine.

2. Corps composite selon la revendication 1, **caractérisé en ce que** la couche centrale (2) ainsi que les deux couches (3, 4) sont constituées de la même polyoléfine.

3. Corps composite selon la revendication 2, **caractérisés en ce que** la polyoléfine est du polypropylène.

4. Corps composite selon l'une des revendications 1 à 3, **caractérisé en ce que** sont prévus comme fibres naturelles des fibres végétales de Kenaf.

5. Corps composite selon l'une des revendications 1 à 4, **caractérisé en ce que** les deux couches (3, 4) présentent une matrice en polyoléfine dans laquelle sont noyées les fibres naturelles.

6. Corps composite selon la revendication 5, **caractérisé en ce qu'**en plus des fibres naturelles, des fibres de polyoléfine sont noyées dans la matrice en polyoléfine des deux couches (3, 4).

7. Corps composite selon la revendication 6, **caractérisé en ce que** la mousse de polyoléfine, les fibres de polyoléfine et la matrice en polyoléfine sont constituées de polypropylène.

8. Corps composite selon la revendication 6 ou 7, **caractérisé en ce que** la part en fibres des couches (3, 4) est constituée respectivement de 30% à 70% de fibres naturelles et pour le reste de fibres de polyoléfine.

9. Corps composite selon l'une des revendications 1 à 8, **caractérisé en ce que** les deux couches (3, 4) sont respectivement reliées par la fusion thermique de leur matériau thermoplastique avec la mousse thermoplastique de la couche centrale (2).

10. Corps composite selon l'une des revendications 1 à 9, **caractérisé en ce qu'**il est exempt de fibres de verre, de polyuréthane, de résine epoxy et de colles.

11. Corps composite selon l'une des revendications 1 à 10, **caractérisé en ce que** la couche centrale (2) est constituée de mousse dure de polypropylène cellulaire expansée.

12. Corps composite selon l'une des revendications 1 à 11, **caractérisé en ce que** la mousse dure de la couche centrale (2) est perméable à l'air.

13. Corps composite selon l'une des revendications 1 à 12, **caractérisé en ce qu'**il est autoporteur et d'une forme stable, avec une densité de 800 à 900 g/m² et une épaisseur de la couche centrale (2) de 4 à 8 mm.

14. Corps composite selon l'une des revendications 1 à 13, **caractérisé en ce qu'**une couche de recouvrement (5) en tissu ou tricot textile ou en un film synthétique est reliée par fusion au moyen d'une couche intermédiaire en polyoléfine au côté éloigné de la couche centrale (2) d'une couche (4).

15. Corps composite selon l'une des revendications 1 à 14, **caractérisé par** une configuration tridimensionnelle, pourvue d'un contour, d'une forme stable.

16. Procédé de fabrication d'un corps composite selon la revendication 1, où les deux couches (3, 4) sont chauffées et sont appliquées dans une enceinte de moulage formée entre deux faces de moulage (11, 12) à la couche centrale (2) et, ce faisant, sont reliées à celle-ci, **caractérisé en ce que** les deux couches (3, 4) sont préchauffées à l'extérieur de l'enceinte de moulage et sont appliquées individuellement selon un écart dans les temps l'une après l'autre à la couche centrale (2) en mousse et sont reliées par fusion à celle-ci de telle sorte que la structure de mousse de la couche centrale (2) est au moins conservée dans une grande mesure.

17. Procédé selon la revendication 16, **caractérisé en ce qu'**après l'application de la première couche (3) sur la couche centrale (2), l'agencement de couches formé (2, 3) est soumis à un refroidissement intermédiaire avant que la deuxième couche préchauffée (4) ne soit appliquée.

18. Procédé selon la revendication 16 ou 17, **caractérisé en ce que** lors de l'application des couches (3, 4) à la couche centrale (2) , l'agencement des couches (1A) est formé en trois dimensions.

19. Procédé selon l'une des revendications 16 à 18, **caractérisé en ce que** les couches (3, 4) sont préchauffées respectivement à une température de 180°C à 200°C.

20. Procédé selon l'une des revendications 16 à 19, **caractérisé en ce qu'**avant l'application des couches (3, 4) sur la couche centrale (2), celle-ci est préalablement mise à une température de 40°C jusqu'à 100°C.

21. Procédé selon l'une des revendications 16 à 20, **caractérisé en ce que** les couches (3, 4), par le préchauffage, sont également pré-comprimées.

22. Procédé selon l'une des revendications 16 à 21, **caractérisé en ce que** lors de l'assemblage par fusion des couches (3, 4) avec la couche centrale (2), au maximum 10% de la couche centrale fondent.

23. Dispositif de fabrication du corps composite selon la revendication 1 avec un moule (10) qui présente un tronçon de moule supérieur (11) et un tronçon de moule inférieur (12), et avec une installation de chauffage avoisinant latéralement le moule pour chauffer les couches (2, 3, 4) du corps composite (1), **caractérisé par** une première presse de chauffage (20A) sur un premier côté du moule (10) pour la première couche (3), une deuxième presse de chauffage (20B) sur un deuxième côté du moule (10) pour la deuxième couche (4), un poste de mise à température mobile (40) pour la couche centrale (2) sur un troisième côté du moule (10) avec une plaque de mise à température mobile (41) pouvant être amenée entre les tronçons de moule (11, 12) du moule ouvert (10) et un bâti de préhension à aiguilles mobile (51) pour une couche de recouvrement (5), qui est disposé sur un quatrième côté du moule (10) et qui est déplaçable entre les tronçons de moule (11, 12) du moule ouvert (10).

24. Dispositif selon la revendication 23, **caractérisé en ce que** la première presse de chauffage (20A), le poste de mise à température (40), la deuxième presse de chauffage (20B) et le bâti de préhension à aiguilles (51) sont répartis autour du moule (10) avec un décalage respectif de 90°, où les deux presses de chauffage (20A, 20B) se font face sur des côtés opposés du moule (10).
